(19) Europäisches Patentamt
European Patent Office
Office européen des brevets

(11) EP 0 786 489 B1

(12) EUROPEAN PATENT SPECIFICATION

(45) Date of publication and mention of the grant of the patent:
**17.07.2002 Bulletin 2002/29**

(21) Application number: **96926640.2**

(22) Date of filing: **13.08.1996**

(51) Int Cl.[7]: **C08G 77/04**, C08G 77/06, C08L 83/04, C08L 83/06

(86) International application number:
**PCT/JP96/02292**

(87) International publication number:
**WO 97/07156 (27.02.1997 Gazette 1997/10)**

# (54) CURABLE POLYMETHYLSILSESQUIOXANE, METHOD FOR CURING THE SAME AND PRODUCTS OF CURING THEREOF

HÄRTBARE POLYMETHYLSILSESQUIOXANE, VERFAHREN ZU DEREN HÄRTUNG UND GEHÄRTETE GEGENSTÄNDE

POLYMETHYLSILSESQUIOXANE DURCISSABLE, SON PROCEDE DE DURCISSEMENT ET SES PRODUITS DE DURCISSEMENT

(84) Designated Contracting States:
**BE DE FR GB NL**

(30) Priority: **15.08.1995 JP 20808795**

(43) Date of publication of application:
**30.07.1997 Bulletin 1997/31**

(73) Proprietor: **Dow Corning Asia, Ltd.**
**Tokyo 100-0005 (JP)**

(72) Inventors:
- **SAITOH, Akihito**
  **Kanagawa 250 (JP)**
- **ITOH, Maki**
  **Kanagawa 259-13 (JP)**

(74) Representative: **Spott, Gottfried, Dr. et al**
**Spott & Weinmiller**
**Patentanwälte**
**Sendlinger-Tor-Platz 11**
**80336 München (DE)**

(56) References cited:
**EP-A- 0 046 695**
**JP-A- 3 020 331**
**JP-A- 4 178 428**
**JP-A- 53 010 700**

- **PATENT ABSTRACTS OF JAPAN vol. 15, no. 512 (C-898), 26 December 1991 & JP 03 227321 A (DOW TORAY)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

FIELD OF THE INVENTION

The present invention relates to a curable polymethyl silsesquioxane suitable for the production of relatively flexible films and monolithic products which are free of detects such as cracks that may cause problems in practical use of the aforementioned products. The invention further relates to a method of curing the aforementioned curable polymethyl silsesquioxane, as well as to cured products obtained by curing the aforementioned curable polymethyl silsesquioxane.

BACKGROUND OF THE INVENTION

Polysilsesquioxane is a general term for silicone resists in which a ratio of a number of oxygen atoms to a number of silicon atoms is equal to 1.5. Since these resins are characterized by high thermal resistance, electrical insulating properties, flame-resistive properties, etc., they find application in the production of semiconductors as a material for resists, interlayer dielectrics and the like [see Silicon Handbook, by Kunio Ito, Nikkan Kogyo Shimbun Publishers, 1990.]

It has been known since long ago that polyphenyl silsesquioxane can be obtained by the method for the production of polymers wherein a prepolymer obtained by equilibrating a product of hydrolysis of phenyl trichlorosilane in the presence of an alkali catalyst is then again equilibrated at high concentration in the presence of an alkali catalyst (J.F. Brown, Jr., et al. J.Am. Soc., vol. 82, page 6194, 1960). However, the synthesis of soluble polymethylsilsesquioxane uses a relatively novel method which consists of dissolving methyltrichlorosilane in the presence of amine in a mixture of ketone with ether or one of the solvents adding water to the solution dropwise, and heating and condensing after hydrolysis (Japanese Examined Patent Publications [Kokoku] Sho 60-17214 and [Kokoku] Hei 1-43773, and US Patent 4399266.) Another method of synthesis consists in dissolving trifunctional methyl silane in an organic solvent, adding water to the solution dropwise at a temperature of from -20°C to -50°C in the presence of an additional inert gas of pressure of 1000 to 3000 Pa, and after hydrolysis, subjecting the mixture to heating and condensing [EP No. 0406911A]. Still another method of synthesis consists of causing a reaction between methyl triacetoxy silane with an equivalent quantity of alcohol and/or water in an organic solvent, thus obtaining alkoxyacetoxy silane. The latter is then formed into a prepolymer by being subjected to polycondensation in an organic solvent and in the presence of sodium hydrogen carbonate. The obtained prepolymer is then subjected to condensation with heating in the presence of at least one catalyst selected from the group consisting of alkali metal hydroxide, alkali earth metal hydroxide, alkali metal fluoride, alkali earth metal fluoride, and triethylamine (Japanese Laid-Open Patent Application (Kokai) Hei 3-20331]. One more method of synthesis consists of dissolving an alkali metal carboxylate and lower alcohol in a liquid mixture formed by two layers of water and hydrocarbon-type solvent. A hydrolysis is then carried out by adding methyl trihalosilane by dripping. The mixture is then subjected to condensation with heating [Japanese Laid-Open Patent Application (Kokai) 3-227321].

A common characteristic feature of all polymethyl silsesquioxanes obtained by any of the above-described methods consists in that they are hard but brittle. Attempts have been made to solve the above problem. Thus, Japanese Examined Patent Publication [Kokoku] Hei 1-43773 describes a method wherein 15 to 30% (by weight) of polymethyl silsesquioxane are accounted for, with a portion having less than 2000 molecular weight calculated for standard polystyrene in gel-permeation chromatography (GPc). However, this polymer was suitable for coating films having a thickness only up to 1.8 to 2.0 μm, and in the case of EP No. 0406911A1 the coating film could be produced without cracks if the maximum thickness of the film does not exceed 3 to 3.5 μm. Thicker films were subject to cracking and did not possess flexibility required for the manufacture of freestanding films.

Freestanding films made of cured polymethyl silsesquioxane can be obtained by using methyl trimethoxy silane as a starting material which is dissolved in methanol, subjected to hydrolysis by dripping water that contains hydrochloric acid, and then subjecting the mixture to condensation with heating, thus producing a polymer. An acetone solution of the aforementioned polymer is then cast and cured with heating to a temperature of 80 to 120°C [see Abe et al. Preprint of the 12th Conference on Inorganic Polymers (Daijunikai Mukikobunshi Kenkyutoronkai Yoshishu), p. 58, 1993]. However, methods where methyl trichlorosilane is used as a starting material are unknown. Methyl trialkoxy silane is more expensive than methyl trichlorosilane, and synthesis of the above polymer requires strict adjustment of a weight ratio of methyl trimethoxy silane to hydrochloric acid and methyl trimethoxy silane to water. Another problem consists in that the manufacture of the film takes a very long time. Furthermore, the freestanding film described by Abe et al., contains a large residual amount of $OH/OCH_3$ groups so that it is not a completely cured polymethyl silsesquioxane. Moreover, the polymer before curing is a partially hydrolyzate, and therefore it can be assumed that this polymer would be unstable in storage.

Japanese Laid-Open Patent Application (Kokai) 3-20331 claims polymethyl silsesquioxane of molecular

weight of 26 to 1,340,000, which include a low molecular weight, i.e. of a number-average molecular weight calculated for polystyrene below 2000. EP No. 0406991A1 also describes a similar compound with a weight-average molecular weight calculated for polystyrene within the range of 6700 to 1,340,000. However, none of the above publications discloses any effect derived from polymethyl silsesquioxane with a low molecular weight within the specified range. Nothing is also mentioned in these publications about the content of hydroxyl groups in the product.

As disclosed in Patent of the same applicant (Canadian Patent No. 0868996, UK Patent No. 1294196, Japanese Laid-Open Patent Application [Kokai] No. 48-101444 (corresponding US Patent No. 3759867), and Japanese Laid-Open Patent Application [Kokai] No. 53-10700 (corresponding US Patent No. 4056492), the content of hydroxyl groups in silicone resins is within the range of 3 to 12 wt.%. However, none of the above publications refers to the molecular weight and therefore nothing is said about the effect of molecular weight with the content of hydroxyl groups on the specific properties of the compound. Furthermore, the aforementioned patent publications have as their object a composition in which a mole ratio of organic groups on silicon to silicon itself is within the range of 1 to 1.8 and which consists mainly of diorganosiloxane units.

Japanese Laid-Open [Kokai] Patent Application No. 50-111198 discloses a reaction of synthesis of polymethyl silsesquioxane of a two-layer water system (but not a two-phase system), the reaction being carried out with the use of an oxygen-containing organic solvent, such as ketone. The above patent, however, specifies neither the molecular weight nor the amount of hydroxyl groups. Furthermore, as disclosed in Japanese Examined Patent Publication [Kokoku] 60-17214, polymethyl silsesquioxane was synthesized from methyl trichlorosilane by means of a method described in Japanese Laid-Open Patent Application [Kokai] 50-111198. But the product contained an insoluble gel and an unstable soluble portion which became insoluble 3 days later. Japanese Laid-Open Patent Application [Kokai] No. 3-227321 also describes a reaction in a two-layer system, but it is limited to a system that consists of hydrocarbon solvent in which a specific alcohol is dissolved, and of water in which an alkali-metal carboxylate is dissolved. More than 80% of the product is a portion with a molecular weight within the range of 2000 to 6000, in terms of a number-average molecular weight calculated for polystyrene. However, the number of hydroxyl groups is not specified. Furthermore, the processes described in all aforementioned publications have a special operation requirement which is a necessity for adjusting the rate of stirring required to maintain a two-layer system during the reaction. As disclosed in aforementioned Canadian Patent No. 0868996, UK Patent 1294196, and Japanese Laid-Open Patent Application [Kokai] 48-101444 (corresponding US Patent No. 3759867), halosilane is subjected to hydrolysis and condensation in a system utilizing acetone as a co-solvent in a mixture of water with a water-insoluble organic solvent. EP-A-0 046 695 discloses a ladder-like lower alkylpolysilsesquioxane having a repeating unit of formula:

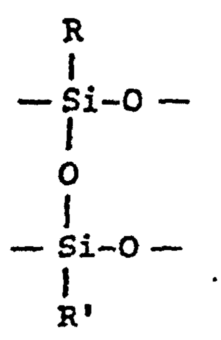

(in which R and R' are the same or different and each represents a lower alkyl group), characterized in that from 15 to 30% by weight of the ladder-like lower alkylpolysilsesquioxane is constituted by a low molecular weight portion having a standard polystyrene-reduced molecular weight of 20,000 or less, as measured by gel permeation chromatography.

Disclosure of the Invention

It is an object of the present invention to provide a cured polymethyl silsesquioxane which possess properties listed in the following items 1) through 4). Another object of the invention is to provide a specific curable polymethyl silsesquioxane which constitutes an indispensable starting material for the production of aforementioned cured polymethyl silsesquioxane as well as to a method of curing of the aforementioned curable polymethyl silsesquioxane.

1) Level of flexibility sufficient for using the product as a freestanding film.

2) Free of cracking to the level which may cause technical problems irrespective of the thickness of a film made of a cured product.
3) Excellent physical properties such as tensile strength, etc.,
4) Obtaining of a cured material which, when cured under the practical curing conditions, acquires properties mentioned in items 1), 2), and 3).

If polymethyl silsesquioxane is used with characteristics which do not fall into the range prescribed for the curable polymethyl silsesquioxane of the present invention, the properties listed in items 1) through 4) above will not be achieved. In particular, as far as the property of item 3) is concerned, the measurements showed that when the polymethyl silsesquioxane did not fall into the range prescribed for the curable polymethyl silsesquioxane of the present invention, it was difficult to obtain a cured polymethyl silsesquioxane with tensile strength which can be subject to measurement.

The present inventors carried out profound studies aimed at film-forming properties of polymethyl silsesquioxane. The results of these studies showed that if polymethyl silsesquioxane has the molecular weight within the specified amount and has a specified amount of hydroxyl groups, it is possible to obtain a cured polymethyl silsesquioxane with a flexibility sufficient for forming a freestanding film as a result of heating. Thus, the inventors arrived at the present invention.

In accordance with the first embodiment, the invention provides a curable polymethyl silsesquioxane characterized by having a number-average molecular weight (M) calibrated against polystyrene within the range of 380 to 2000 and represented by the following formula:

$$[CH_3SiO_{3/2}]_n[CH_3Si(OH)O_{2/2}]_m$$

(where m and n are positive numbers which give said molecular weight, a ratio of m/(m + n) has a value that is within the boundaries of zone A in Fig. 1 which is a graph having $1/(M \times 10^{-3})$ on the abscissa and m/(m + n) on the ordinate and which defines an area limited by the lines represented by the following formulae from (1) to (4), the lines themselves and their intersections being included:

(Formula 1) $$m/(m + n) = 0.152/(M \times 10^{-3}) + 0.10$$

(Formula 2) $$1/(M \times 10^{-3}) = 1{,}000/2{,}000$$

(Formula 3) $$1/(M \times 10^{-3}) = 1{,}000/380$$

(Formula 4) $$m/(m + n) = 0.034/(M \times 10^{-3})),$$

Said curable polymethyl silsesquioxane of the first embodiment being obtained by hydrolyzing and condensating a methyltrihalosilane represented by the following formula $MeSiX_3$ (where Me is a methyl group and X is halogen atom selected from F, Cl, Br, and I) in a two-phase system consisting of water and a substance selected from (a) an oxygen-containing organic solvent or (b) an oxygen-containing organic solvent in a mixture containing a hydrocarbon solvent incorporated therein in an amount of not more than 50 vol.%.

In accordance with the third embodiment, the present invention provides a method of curing aforementioned curable polymethyl silsesquioxanes, wherein the polymethyl silsesquioxanes of the first embodiment are heated to a temperature which is not lower than 50°C but which is not higher than 350°C.

In accordance with the fourth embodiment, the present invention provides a cured polymethyl silsesquioxane obtainable by heating and curing the curable polymethyl silsesquioxanes of the first embodiment at a temperature not lower than 50°C but which is not higher than 350°C.

The present invention provides a curable polymethyl silsesquioxane indispensable for manufacturing a cured material of a polymethyl silsesquioxane with excellent properties. The invention also provides a method of curing of the aforementioned polymethyl silsesquioxane. Such cured polymethyl silsesquioxane is practically suitable for obtaining thick coating films or freestanding films and cured material with heretofore unattainable flexibility. These products may find wide practical application since they combine in themselves heat-resistant, electrical-insulating, and flame-resistant properties, as well as flexibility.

Resistance to heat and flexibility of the cured polymethyl silsesquioxane of the present invention are properties which are especially superior to similar properties of cured materials prepared from the conventional silicone resins. These new properties of the polymethyl silsesquioxane of the invention make it suitable for use in the fields where the application of conventional silicone materials has been limited.

Brief Description of the Drawing

Fig. 1 is a graph illustrating the area of m, n values defined by the above formulae for cured silsesquioxane of the present invention represented by $[CH_3SiO_{3/2}]_n[CH_3Si(OH)O_{2/2}]_m$.

Description of Preferred Embodiments

In accordance with the first embodiment of the invention, the curable polymethyl silsesquioxane has a number-average molecular weight (M) calculated for polystyrene not smaller than 380, but not higher than 2000 and is characterized by being represented by the following formula:

$$[CH_3SiO_{3/2}]_n[CH_3Si(OH)O_{2/2}]_m$$

(where m and n are positive numbers which give said molecular weight, the ratio of m/(m + n) has a value that is within the boundaries of zone A in Fig. 1 which is a graph having $1/(M \times 10^{-3})$ on the abscissa and m/(m + n) on the ordinate and which defines an area limited by the lines represented by the following formulae from (1) to (4), the lines themselves and their intersections being included:

(Formula 1) $$m/(m + n) = 0.152/(M \times 10^{-3}) + 0.10$$

(Formula 2) $$1/(M \times 10^{-3}) = 1{,}000/2{,}000$$

(Formula 3) $$1/(M \times 10^{-3}) = 1{,}000/380$$

(Formula 4) $$m/(m + n) = 0.034/(M \times 10^{-3})).$$

If the values of M and m/(m + n) are within the specified ranges given above, and if the curing is carried out under practical conditions, it would be possible to obtain a cured polymethyl silsesquioxane with properties described in aforementioned items 1), 2), and 3).

If the molecular weight of the aforementioned curable polymethyl silsesquioxane is beyond the aforementioned limits or if the quantity of silanol groups exceeds the aforementioned upper limit, the cured body of polymethyl silsesquioxane obtained from such a starting material will not be sufficiently flexible for the formation of a film because of cracks and similar defects in the material. If, on the other hand, the quantity of silanol groups is below the lower limit, the product will not possess sufficient curability.

The aforementioned curable polymethyl silsesquioxane of the first embodiment is obtained with the molecular weight and the quantity of silanol groups within the prescribed range by hydrolyzing and condensating a methyltrihalosilane represented by the following formula $MeSiX_3$ (where Me is a methyl group and X is halogen atom selected from F, Cl, Br, and I) in a two-phase system consisting of water and a substance selected from (a) an oxygen-containing organic solvent or (b) an oxygen-containing organic solvent in a mixture containing a hydrocarbon solvent in a mixture containing a hydrocarbon solvent incorporated therein in an amount of not more than 50 vol.%. The curable polymethyl silsesquioxane obtained in accordance with the invention is sufficiently flexible and heat-resistant.

In accordance with the third embodiment of the present invention, the cured polymethyl silsesquioxane can be obtained with the properties mentioned in 1) through 4) if the curable polymethyl silsesquioxanes of the aforementioned first and second embodiments are heated to a temperature not lower than 50°C, but not higher than 350°C.

It is preferable to select the heating temperature not lower than 80°C, but not higher than 250°C.

If the above temperature is below 50°C, the reaction will not progress with a sufficient rate. And if the temperature exceeds 350°C, siloxane will start to decompose.

In the case of curing by heating, the target curable polymethyl silsesquioxane of the present invention can

be cured by heating it to an appropriate temperature. However, since the curable polymethyl silsesquioxane of the present invention is soluble in an organic solvent, the aforementioned curable polymethyl silsesquioxane can be first dissolved in an organic solvent and then heated after casting performed by evaporating the solvent. The following are examples of solvents suitable for dissolving the curable polymethyl silsesquioxane of the present invention: aromatic hydrocarbon solvents, such as benzene, toluene, or xylene, ether-type solvents, such as diethyl ether, or tetrahydrofuran, alcohol-type solvents, such as butanol, or hexanol, ketone-type solvents, such as acetone, methylethyl ketone, or methylisobutyl ketone, ester-type solvents, such as ethyl acetate, butyl acetate, or halogenated hydrocarbon solvents, such as chloroform, trichloroethylene, or carbon tetrachloride.

When the curable polymethyl silsesquioxane of the present invention is heated and cured, it is also possible to enhance the curing reaction by adding a catalyst suitable for curing.

In accordance with the fourth embodiment of the present invention, a cured body of polymethyl, silsesquioxane is obtained by heating the curable polymethyl silsesquioxanes of the first embodiment by a method of the third embodiment. The resulting cured polymethyl silsesquioxane possesses properties mentioned above in items 1) through 4).

The following description will exemplify a favorable method for synthesis for polymethyl silsesquioxane having the molecular weight within the aforementioned prescribed range of molecular weights and the amount of hydroxyl groups.

(1) A method comprising the steps of: forming a two-phase system consisting of water and a substance selected from (a) an oxygen-containing organic solvent or (b) an oxygen-containing organic solvent in a mixture containing a hydrocarbon solvent incorporated therein in an amount of not more than 50 vol.%, adding dropwise components (A) or (B) given below to the above-mentioned system, hydrolyzing the methyltrihalosilane, and subjecting the product of the hydrolysis to condensation:

(A) methyltrihalosilane represented by the following formula: $MeSiX_3$ (where Me is a methyl group and X is halogen atom selected from F, Cl, Br, and I;

(B) a solution obtained by dissolving the aforementioned methyltrihalosilane in (a) an oxygen-containing organic solvent or in (b) a mixture of the oxygen-containing organic solvent containing a hydrocarbon solvent incorporated therein an amount of not more than 50 vol.%.

(2) The method similar to the one described in Item (1) above, with the exception that the reaction in the two-phase system results from dripping the solution (B) of aforementioned item (1) into only water.

(3) The method similar to the one described in Item (1) above, with the exception that the reaction in the two phase system results from dipping the solution (B) of aforementioned item (1) and water simultaneously into an empty flask.

Here, X preferably is bromine, chlorine, or, more preferably, chlorine. The phrase "to form a two-phase system consisting of water and a solvent" used in this application means that water and an organic solvent are immiscible not to form an uniform solution. In this, both a two-layer state of a layer of an organic layer and a water layer produced as a result of a low-speed stirring, and a suspension state produced as a result of intensive stirring are acceptable. Hereinafter, the former will be referred to as "the formation of two layers".

The organic solvent which is suitable for use in the method of the present invention is an oxygen containing solvent which dissolves methyltrihalosilane and is capable of forming a two-phase system with water. The solvent could be partially soluble in water if a two-phase system is still formed, and could further contain less than 50 vol.% of the hydrocarbon solvent. It is impractical to have the content of the hydrocarbon solvent above the aforementioned limit, because it may lead to an increase in the amount of gel and to a decrease in the yield of the target product. Japanese Laid-Open Patent Application [Kokai] 3-227321 also mentions that polymethyl silsesquioxane may be obtained in a system prepared by adding a small amount of specified lower alcohol to hydrocarbon solvent. But in this case the reaction is limited to a two-layer system, and it is also mentioned that when alcohol is used in large quantities, the obtained polymethyl silsesquioxane loses stability in storage. In this case alcohol is used as a co-solvent of a hydrocarbon solvent and water. Contrary to this, in the composition of an organic solvent of the present invention, the oxygen-containing solvent constitutes a main component of the reaction system, and along with a hydrolysis and condensation reaction on the interface with water, the molecular weight of the product and the quantity of hydroxyl groups can be controlled by solubility, etc., in the organic solvent layer of the product. The mixing of the hydrocarbon solvent is allowed within the limits which do not cause noticeable gelation. Even if the organic solvent of the present invention is miscible with water, it is suitable if the solvent forms a two-phase system with water containing water-soluble inorganic base or a salt of a weak acid having buffering ability.

The following are examples of oxygen-containing solvents suitable for the present invention: ketone-type solvents, such as methylethyl ketone, diethyl ketone, methylisobutyl ketone, acetyl acetone, or cyclohexanone, ether-type solvents, such as diethyl ether, di-normal-propyl ether, dioxane, diethylene glycol dimethyl ether, or tetrahydrofuran, ester-type solvent, such as ethylacetate, butylacetate, or butylpropionate, or alcohol-type solvent, such as n-butanol, or hexanol. The invention, however, is not limited to these examples. Most preferable among the above are ketone, ether, and ester-type solvents. These solvents can be used in combinations of two or more. The following are examples of the hydrocarbon solvents: aromatic hydrocarbon solvents, such as benzene, toluene, or hexylene, aliphatic hydrocarbon solvents, such as hexane, or heptane, halogenated carbon solvents, such as chloroform, trichloroethylene, or carbontetrachloride. However, the invention is not limited to the above examples. There are no special limitations to the amount of organic solvents to be used. It is preferable, however, to use them in an amount of 50 to 2000 parts by weight per 100 parts by weight of methyl trihalosilane. If the organic solvent is contained in an amount less than 50 parts by weight per 100 parts by weight of trimethyl halosilane, the obtained polymethyl silsesquioxane will have insufficient solubility. Under certain circumstances, it would be impossible to obtain polymethyl silsesquioxane with the molecular weight within the desired range, because of an increase in the molecular weight. On the other hand, if the aforementioned amount exceeds 2000 parts by weight, the hydrolysis and condensation of the methyl trihalosilane cannot progress quickly, and therefore it would be impossible to obtain polymethyl silsesquioxane with the molecular weight in the desired range. Also, there are no special limitations to the amount of water which can be used, but 10 to 3000 parts by weight of water per 100 parts by weight of methyl trihalosilane are preferable.

The reaction is still possible even if no said base or salt is added to the aqueous phase at all, but the polymethyl silsesquioxane obtained in this case will have a higher molecular weight. This is because the reaction is advanced under the effect of hydrogen chloride obtained from chlorosilane, so that by adding a water-soluble inorganic base which limits the acidity or a salt of a weak acid which possesses buffering properties, it is possible to synthesize polymethyl silsesquioxane with a lower molecular weight. Furthermore, the acidity can be reduced by using amine, but, as described in Japanese Examined Patent Publication [Kokoku] 60-17214, if the method is used, as disclosed in Japanese Laid-Open Patent Application [Kokai] 50-111198, in a two-layer system consisting of ketone and amine-containing water with synthesis of polymethyl silsesquioxane from methyl trichlorosilane, the obtained product will contain an insoluble gel, and the soluble portion will be unstable and will become insoluble 3 days later.

The following are examples of water-soluble inorganic bases suitable for the invention: water-soluble alkalis, such as lithium hydroxide, sodium hydroxide, potassium hydroxide, calcium hydroxide, or magnesium hydroxide. Salts of weak acids which possess buffering properties may be represented by carbonates, such as sodium carbonate, potassium carbonate, calcium carbonate, or magnesium carbonate, hydrocarbonates, such as sodium hydrocarbonate, or potassium hydrocarbonate, oxalates, such as potassium trihydrate bis-oxalate, carboxylates, such as potassium hydrogen phthalate, or sodium acetate, phosphates, such as disodium hydrogen phosphate, or potassium dihydrogenphosphate, or borate, such as sodium tetraborate. The invention, however, is not limited to the above examples. It is recommended that the above bases be used in the amount of less than 1.8 gram-equivalent quantity per 1 mol of halogen atom in one molecule of trihalosilane. In other words, the amount of said base or salt should be not more than 1.8 times the quantity of the exact amount to neutralize the hydrogen halide produced in the case of complete hydrolysis of halosilane. If the above limit is exceeded, the reaction will be prone to formation of an insoluble gel. The aforementioned water-soluble inorganic bases and salts of weak acids with buffering properties may be used in combination of two or more, provided their total amount is within aforementioned quantitative limits.

In hydrolysis of methyltrihalosilane, the rate of stirring of the reaction solution can be sufficiently low in order to maintain a two-layer system consisting of an aqueous phase and an organic solvent phase. But there is no problem if, as a result of intense stirring, a suspension is formed. It is recommended that the reaction temperature be in the range of 20°C (room temperature) to 120°C, but the most preferable range is from 40°C to 100°C.

Because of impurities contained in the starting material, it is possible that the curable polymethyl silsesquioxane of the present invention will have some units with the structures different from those specified by the aforementioned first embodiment of the present invention. Examples of such units may be, e.g., units which have lower alkyl groups other than methyl groups, monofunctional groups such as those represented by the following formula: $R_3SiO_{1/2}$; bifunctional groups such as those represented by the following formula: $R_3SiO_{2/2}$ (where R is a lower alkyl), tetrafunctional groups such as those represented by the following formula: $SiO_{4/2}$, or the like. The aforementioned curable polymethylsilsesquioxane contains OH groups in the structural formula shown above. But it is possible that said polymethylsilsesquioxane may contain OH groups in structures different from the aforementioned structure in a very small quantity. The curable polymethyl silsesquioxane of the present invention has the structure that satisfies the conditions specified by the aforementioned first embodiment. If however, the structural units which are generated for the reasons described above are on the level that is not detrimental to the effect of the invention, their presence is allowable.

The following are preferable embodiments of the present invention.

(Preferable Embodiment 1)

Curable polymethyl silsesquioxane which has a number-average molecular weight (M) calculated for polystyrene not less than 380 and not more than 1800 and represented by the following general formula:

$$[CH_3SiO_{3/2}]_n[CH_3Si(OH)O_{2/2}]_m$$

where m and n are positive numbers which give aforementioned molecular weight, a ratio of m/(m + n) has a value that is within the boundaries of zone A in Fig. 1, said polymethylsilsesquioxane being prepared by hydrolyzing and condensating a methyltrihalosilane represented by the following formula: $MeSiX_3$ (where Me is a methyl group and X is halogen atom selected from F, Cl, Br, and I) in a two-phase system consisting of water and a substance selected from (a) an oxygen-containing organic solvent or (b) an oxygen-containing organic solvent in a mixture containing a hydrocarbon solvent in a mixture containing a hydrocarbon solvent incorporated therein in an amount of not more than 50 vol.%.

(Preferable Embodiment 3)

A method of manufacturing a cured polymethyl silsesquioxane characterized by heating the aforementioned polymethyl silsesquioxane of the aforementioned embodiment 1 at a temperature above 50°C, but below 350°C.

(Preferable Embodiment 4)

A method of manufacturing a cured polymethyl silsesquioxane characterized by heating the aforementioned polymethyl silsesquioxane of the aforementioned Preferred Embodiment 1 at a temperature above 50°C, but below 350°C.

The invention will be now described in more detail with reference to the following examples and comparative examples which, however, should not be construed as limiting the scope of the present invention.

Example 1

A reactor equipped with a refluxing condenser, dropping funnel, and a stirrer was filled with 12.7g (0.12 mol) of sodium carbonate and 80 ml of water. The contents were stirred and combined with 80 ml of methyl isobutyl ketone. The stirring speed was slow enough to keep an organic layer and a water layer. To the mixture was then added 14.9g (0.1 mol) of methyl trichlorosilane slowly dropwise from the dropping funnel over 30 minutes. During the addition, the temperature of the reaction mixture increased to 60°C. The reaction mixture was then heated and stirred for 24 hours on a 60°C oil bath. Upon completion of the reaction, the organic layer was washed until the washing water became neutral, and the organic layer was then dried with the use of a drying agent. After removal of the drying agent, the solvent was removed under vacuum. And after drying in vacuum overnight, a white solid substance of polymethyl silsesquioxane was obtained. The molecular weight distribution of polymethyl silsesquioxane was measured by GPC [Tosoh Corporation, Model HCL-8020] (2 columns of Tosoh Corporation, trademark - TSKgel $GMH_{HR}$-L, with the use of chloroform as a polymer solvent. The analysis showed that the product had a weight-average molecular weight calibrated against polystyrene equal to 2700, and number-average molecular weight equal to 870. The amount of hydroxyl groups determined from $^{29}$Si NMR spectrum [Bruker, Model ACP-300] was equal to 0.18 per 1 atom of silicon (in this case, 0.18 is a value of m/(m + n) ratio). This polymethyl silsesquioxane was soluble in chloroform, dichloromethane, methyl isobutyl ketone, acetone, tetrahydrofurane, etc., and did not change its solubility and molecular weight distribution after 5 months storage at room temperature in air.

1g of the above polymethyl silsesquioxane was dissolved in 5g of chloroform, and the solution was combined with 5 mg of tin dioctoate. The obtained solution was spread over a glass plate and kept for 2 hours at room temperature. A transparent film formed on the glass was peeled off from the glass and subjected to 10 minute thermal cross linking at 100°C. A specimen having the length of 50 mm, the width of 10 mm, and thickness of 280 μm was cut from the obtained freestanding film and tested with regard to the tensile strength. The test was carried out on a universal testing machine Model 4301 of Instron Company with a crosshead speed of 20 mm/min. Measurements were carried out on five specimens. The resulting tensile strength was 15 to 20 MPa. Following this, a freestanding film having a thickness of 70 μm was subjected to bending testing on a bending tester according to JIS K-5400 with the use of a rod having the minimum diameter of 2 mm and with bending of the film by 180°. Fractures and cracks were not revealed after testing. Furthermore, this freestanding film was ground and measured with regard to the thermogravimetry (the product of Rigaku Co., Model TG8101D, measurement in air with the heating rate of 10°C/min). The initial decomposition temperature was 470°C, the 5% weight-loss temperature was 523°C.

Example 2

Similar to Example 1, an experiment was carried out in a two-layer system consisting of an organic layer and a water layer. However, the sodium carbonate was replaced by 13.5g (0.24 mol) of potassium hydroxide. The reaction was carried out with the use of 80 ml of water, 80 ml of methyl isobutyl ketone, and 14.9g (0.1 mol) of methyl trichlorosilane. As a result, a white solid substance of polymethyl silsesquioxane was obtained. A molecular weight distribution of the obtained polymethyl silsesquioxane was analyzed by the same method as in Example 1 and showed a weight-average molecular weight equal to 2150 and a number-average molecular weight equal to 730. The number of hydroxyl groups was 0.22 per 1 atom of silicon. This polymethyl silsesquioxane was soluble in chloroform, dichloromethane, methyl isobutyl ketone, acetone, tetrahydrofurane, etc., and did not change its solubility and molecular weight distribution after 5 months storage at room temperature in air.

By the same method as in Example 1, a film was produced from 1g of the polymethyl silsesquioxane. Tensile tests of the film showed the tensile strength between 10 and 11 MPa. A freestanding film having a 70 µm thickness was subjected to a bending test by bending the film 180° around a 2-mm diameter rod. No fracturing or cracking occurred as a result of the bending test.

Example 3

Similar to Example 1, an experiment was carried out in a two-layer system consisting of an organic layer and a water layer. However, without the use of a base, etc., the reaction was carried out with the use of 80 ml of water, 80 ml of methyl isobutyl ketone, and 14.9g (0.1 mol) of methyl trichlorosilane. As a result, a white solid substance of polymethyl silsesquioxane was obtained. A molecular weight distribution of the obtained polymethyl silsesquioxane was analyzed by the same method as in Example 1 and showed a weight-average molecular weight equal to 6520 and a number-average molecular weight equal to 1180. The number of hydroxyl groups was 0.15 per 1 atom of silicon. This polymethyl silsesquioxane was soluble in chloroform, dichloromethane, methyl isobutyl ketone, acetone, tetrahydrofurane, etc., and did not change its solubility and molecular weight distribution after 5 months storage at room temperature in air.

By the same method as in Example 1, a film was produced from 1g of the polymethyl silsesquioxane. Tensile tests of the film showed the tensile strength between 16 and 19 MPa. A freestanding film having 70 µm thickness was subjected to a bending test by bending the film 180° around a 2-mm diameter rod. No fracturing or cracking occurred as a result of the bending test.

Example 4

The reaction procedure was the same as in Example 1, and the reaction was carried out with the use of 12.7g (0.12 mol) of sodium carbonate, 80 ml of water, 80 ml of methyl isobutyl ketone, and 14.9g (0.1 mol) of methyl trichlorosilane. However, the reaction was carried out: under conditions of vigorous stirring, without formation of the two-layer system consisting of an organic phase and an aqueous phase. As a result, a white solid substance of polymethyl silsesquioxane was obtained. A molecular weight distribution of the obtained polymethyl silsesquioxane was analyzed by the same method as in Example 1 and showed a weight-average molecular weight equal to 950 and a number-average molecular weight equal to 560. The number of hydroxyl groups was 0.23 per 1 atom of silicon. This polymethyl silsesquioxane was soluble in chloroform, dichloromethane, methyl isobutyl ketone, acetone, tetrahydrofurane, etc., and did not change its solubility and molecular weight distribution after 5 months storage at room temperature in air.

By the same method as in Example 1, a film was produced from 1g of the polymethyl silsesquioxane. Tensile tests of the film showed the tensile strength between 15 and 19 MPa. A freestanding film having 70 µm thickness was subjected to a bending test by bending the film 180° around a 2-mm diameter rod. No fracturing or cracking occurred as a result of the bending test.

Furthermore, this freestanding film was ground and measured with regard to the thermogravitation loss in a manner similar to that of Example 1. The starting weight-decrease temperature was 478°C, the 5% weight-decrease temperature was 519°C.

Example 5

The experiment was carried out similar to Example 1. However, the reaction was carried out with the use of 80 ml tetrahydrofurane as an organic solvent, 12.7g (0.12 mol) of sodium carbonate, 80 ml of water, and 14.9g (0.1 mol) of methyl trichlorosilane. As a result, a white solid substance of polymethyl silsesquioxane was obtained. Two layers, i.e an organic layer and a water layer were formed similar to the experiment of Example 1. A molecular weight distribution of the obtained polymethyl silsesquioxane was analyzed by the same method as in Example 1 and showed

a weight-average molecular weight equal to 5740 and a number-average molecular weight equal to 890. The number of hydroxyl groups was 0.15 per 1 atom of silicon. This polymethyl silsesquioxane was soluble in chloroform, dichloromethane, methyl isobutyl ketone, acetone, tetrahydrofurane, etc., and did not change its solubility and molecular weight distribution after 5 months storage at room temperature in air.

By the same method as in Example 1, a film was produced from 1g of the polymethyl silsesquioxane. Tensile tests of the film showed the tensile strength between 15 and 21 MPa. A freestanding film having 70 μm thickness was subjected to a bending test by bending the film 180° around a 2-mm diameter rod. No fracturing or cracking occurred as a result of the bending test.

Example 6

Similar to Example 1, a two-layer reaction system with an organic layer and an aqueous layer was formed. However, the reaction was carried out with the use of 80 ml of 1-butanol as an organic solvent, 12.7g (0.12 mol) of sodium carbonate, 80 ml of water, 14.9g (0.1 mol) of methyl trichlorosilane. After adding the chlorosilane by dripping, the reaction was carried out for 2 hours at 30°C. As a result, a white solid substance of polymethyl silsesquioxane was obtained. A molecular weight distribution of the obtained polymethyl silsesquioxane was analyzed by the same method as in Example 1 and showed a weight-average molecular weight equal to 770 and a number-average molecular weight equal to 570. The number of hydroxyl groups was 0.28 per 1 atom of silicon. This polymethyl silsesquioxane was soluble in chloroform, dichloromethane, methyl isobutyl ketone, acetone, tetrahydrofurane, etc., and did not change its solubility and molecular weight distribution after 5 months storage at room temperature in air.

By the same method as in Example 1, a film was produced from 1g of the polymethyl silsesquioxane. Tensile tests of the film showed the tensile strength between 14 and 17 MPa. A freestanding film having 70 μm thickness was subjected to a bending test by bending the film 180° around a 2-mm diameter rod. No fracturing or cracking occurred as a result of the bending test.

Example 7

Similar to Example 4, the reaction was carried out with high-speed stirring without formation of two layers consisting of a water phase and an organic phase. A mixture consisting of 12.7g (0.12 mol) of sodium carbonate, 80 ml of water, and 60 ml of methyl isobutyl ketone was prepared in a reactor. The mixture was then combined with a solution which was formed by dissolving 14.9g (0.1 mol) of methyl trichlorosilane in 20 ml of methyl isobutyl ketone and which was added by dripping. As a result, a white solid substance of polymethyl silsesquioxane was obtained. A molecular weight distribution of the obtained polymethyl silsesquioxane was analyzed by the same method as in Example 1 and showed a weight-average molecular weight equal to 580 and a number-average molecular weight equal to 500. The number of hydroxyl groups was 0.29 per 1 atom of silicon. This polymethyl silsesquioxane was soluble in chloroform, dichloromethane, methyl isobutyl ketone, acetone, tetrahydrofurane, etc., and did not change its solubility and molecular weight distribution after 5 months storage at room temperature in air.

By the same method as in Example 1, a film was prepared from 1g of the polymethyl silsesquioxane using a catalytic quantity of 12 mg. Tensile tests of the film showed that the tensile strength was between 7 and 13 MPa. Similar to Example 1, a freestanding film having 70 μm thickness was subjected to a bending test by bending the film 180° around a 2-mm diameter rod. No fracturing or cracking occurred as a result of the bending test.

Example 8

Similar to Example 4, the reaction was carried out with high-speed stirring without formation of two layers consisting of a water phase and an organic phase. The reactor was first loaded only with an aqueous solution formed by dissolving 12.7g (0.12 mol) of sodium carbonate, 80 ml of water, and then the solution was combined with the solution of 14.9g (0.1 mol) of methyl trichlorosilane dissolved in 80 ml of methyl isobutyl ketone added by dripping. And then the reaction was carried out in the same manner as in Example 1, whereby a white solid substance of polymethyl silsesquioxane was obtained. A molecular weight distribution of the obtained polymethyl silsesquioxane was analyzed by the same method as in Example 1 and showed a weight-average molecular weight equal to 690 and a number-average molecular weight equal to 540. The number of hydroxyl groups was 0.25 per 1 atom of silicon. This polymethyl silsesquioxane was soluble in chloroform, dichloromethane, methyl isobutyl ketone, acetone, tetrahydrofurane, etc., and did not change its solubility and molecular weight distribution after 5 months storage at room temperature in air.

By the same method as in Example 1, a film was prepared from 1g of the polymethyl silsesquioxane using a catalytic quantity of 12 mg. Tensile tests of the film showed that the tensile strength was between 11 and 20 MPa. Similar to Example 1, a freestanding film having 70 μm thickness was subjected to a bending test by bending the film

180° around a 2-mm diameter rod. No fracturing or cracking occurred as a result of the bending test.

Example 9

Similar to Example 8, the reaction was carried out with high-speed stirring without formation of two layers consisting of a water phase and an organic phase. However, without the use of sodium carbonate, only 80 ml of water were loaded in the reactor under conditions of vigorous stirring, and then the contents of the reactor was combined with 14.9g (0.1 mol) of the solution of methyl trichlorosilane dissolved in 80 ml of methyl isobutyl ketone added by dripping. As a result, a white solid substance of polymethyl silsesquioxane was obtained. A molecular weight distribution of the obtained polymethyl silsesquioxane was analyzed by the same method as in Example 1 and showed a weight-average molecular weight equal to 850 and a number-average molecular weight equal to 600. The number of hydroxyl groups was 0.23 per 1 atom of silicon. This polymethyl silsesquioxane was soluble in chloroform, dichloromethane, methyl isobutyl ketone, acetone, tetrahydrofurane, etc., and did not change its solubility and molecular weight distribution after 5 months storage at room temperature in air.

By the same method as in Example 1, a film was prepared from 1g of the polymethyl silsesquioxane using a catalytic quantity of 12 mg. Tensile test of the film showed that the tensile strength was between 15 and 18 MPa. Similar to Example 1, a freestanding film having 70 μm thickness was subjected to a bending test by bending the film 180° around a 2-mm diameter rod. No fracturing or cracking occurred as a result of the bending test.

Example 10

Similar to Example 1, the experiment was carried out in a two-layer system consisting of an organic layer and a water layer, and the reaction was carried out with the use of 15.9g (0.15 mol) of sodium carbonate, 80 ml of water, 80 ml of methyl isobutyl ketone, and 14.9g (0.1 mol) of methyl trichlorosilane. As a result, a white solid substance of polymethyl silsesquioxane was obtained. A molecular weight distribution of the obtained polymethyl silsesquioxane was analyzed by the same method as in Example 1 and showed a weight-average molecular weight equal to 2090 and a number-average molecular weight equal to 860. The number of hydroxyl groups was 0.19 per 1 atom of silicon. This polymethyl silsesquioxane was soluble in chloroform, dichloromethane, methyl isobutyl ketone, acetone, tetrahydrofurane, etc., and did not change its solubility and molecular weight distribution after 5 months storage at room temperature in air.

By the same method as in Example 1, a film was produced from 1g of the polymethyl silsesquioxane. Tensile tests of the film showed the tensile strength between 14 and 16 MPa. A freestanding film having 70 μm thickness was subjected to a bending test by bending the film 180° around a 2-mm diameter rod. No fracturing or cracking occurred as a result of the bending test.

Example 11

Similar to Example 1, the experiment was carried out in a two-layer system consisting of an organic layer and a water layer, and the reaction was carried out with the use of 19.1g (0.18 mol) of sodium carbonate, 80 ml of water, 80 ml of methyl isobutyl ketone, and 14.9g (0.1 mol) of methyl trichlorosilane. As a result, a white solid substance of polymethyl silsesquioxane was obtained. A molecular weight distribution of the obtained polymethyl silsesquioxane was analyzed by the same method as in Example 1 and showed a weight-average molecular weight equal to 2470 and a number-average molecular weight equal to 890. The number of hydroxyl groups was 0.19 per 1 atom of silicon. This polymethyl silsesquioxane was soluble in chloroform, dichloromethane, methyl isobutyl ketone, acetone, tetrahydrofurane, etc., and did not change its solubility and molecular weight distribution after 5 months storage at room temperature in air.

By the same method as in Example 1, a film was produced from 1g of the polymethyl silsesquioxane similar to the method of Example 1 using 12 mg of catalytic quantity. Tensile tests of the film showed the tensile strength between 17 and 20 MPa. A freestanding film having 70 μm thickness was subjected to a bending test by bending the film 180° around a 2-mm diameter rod. No fracturing or cracking occurred as a result of the bending test.

Example 12

Similar to Example 1, the experiment was carried out in a two-layer system consisting of an organic layer and a water layer, and the reaction was carried out with the use of 80 ml of water, 80 ml of methyl isobutyl ketone and 14.9g (0.1 mol) of methyl trichlorosilane. However, sodium carbonate was used in an amount of 3.18g (0.03 mol). The reaction was carried out at 90°C for 24 hours. As a result, a white solid substance of polymethyl silsesquioxane was obtained. A molecular weight distribution of the obtained polymethyl silsesquioxane was analyzed by the same method as in

Example 1 and showed a weight-average molecular weight equal to 13360 and a number-average molecular weight equal to 1350. The number of hydroxyl groups was 0.14 per 1 atom of silicon. This polymethyl silsesquioxane was soluble in chloroform, dichloromethane, methyl isobutyl ketone, acetone, tetrahydrofurane, etc., and did not change its solubility and molecular weight distribution after 5 months storage at room temperature in air.

By the same method as in Example 1, a film was produced from 1g of the polymethyl silsesquioxane using 12 mg of catalytic quantity. Tensile tests of the film showed the tensile strength between 16 and 18 MPa. A freestanding film having 70 μm thickness was subjected to a bending test by bending the film 180° around a 2-mm diameter rod. No fracturing or cracking occurred as a result of the bending test.

Example 13

Similar to Example 1, the experiment was carried out in a two-layer system comprising 64 ml of methyl isobutyl ketone and 16 ml of toluene. Other components used in the reaction were 12.7g (0.12 mol) of sodium carbonate, 80 ml of water, and 14.9g (0.1 mol) of methyl trichlorosilane. After adding chlorosilane by dripping, the reaction was continued for 2 hours at 30°C. As a result, a white solid substance of polymethyl silsesquioxane was obtained. A molecular weight distribution of the obtained polymethyl silsesquioxane was analyzed by the same method as in Example 1 and showed a weight-average molecular weight equal to 2970 and a number-average molecular weight equal to 930. The number of hydroxyl groups was 0.20 per 1 atom of silicon. This polymethyl silsesquioxane was soluble in chloroform, dichloromethane, methyl isobutyl ketone, acetone, tetrahydrofurane, etc., and did not change its solubility and molecular weight distribution after 5 months storage at room temperature in air.

By the same method as in Example 1, a film was produced from 1g of the polymethyl silsesquioxane. Tensile tests of the film showed the tensile strength between 19 and 21 MPa. A freestanding film 70 μm thickness was subjected to a bending test by bending the film 180° around a 2-mm diameter rod. No fracturing or cracking occurred as a result of the bending test.

Example 14

A cured film obtained in Example 1 was subjected to heating and crosslinking, first at 100°C during 1 hour and then at 250°C during 3 days. This completely cured film obtained by this method was also able to be subjected to tensile strength testing and remained sufficiently flexible. Tensile tests of the film showed that the tensile strength was between 8 and 10 MPa. A freestanding film having 70 μm thickness was subjected to a bending test by bending the film 180° around a 4-mm diameter rod, and no fracturing or cracking occurred as a result of the bending test. Cracks were also not found when a similar test was conducted by bending the film 100° around a 2-mm diameter rod.

Example 15

1g of the polymethyl silsesquioxane obtained in Example 1 was dissolved in 5g of chloroform, and then a film was formed in the same manner as in Example 1, with the exception that 22 mg of dibutyltin dilaurate were used as a catalyst instead of tin dioctoate. Similar to Example 1, a film was produced and then subjected to tensile strength testing. Tensile tests of the film showed that the tensile strength was between 9 and 13 MPa. A freestanding film having 70 μm thickness was subjected to a bending test by bending the film 180° around a 2-mm diameter rod, and no fracturing or cracking occurred as a result of the bending test.

Example 16

1g of the polymethyl silsesquioxane obtained in Example 1 was dissolved in 5g of chloroform, and then a film was formed in the same manner as in Example 1, with the exception that 22 mg of dibutyltin diacetate were used as a catalyst instead of tin dioctoate. Similar to Example 1, a film was produced and subjected to tensile strength testing which showed that the tensile strength was between 11 and 19 MPa. Similar to Example 1, a freestanding film having 70 μm thickness was subjected to a bending test by bending the film by 180° around a 2-mm diameter rod, and no fracturing or cracking occurred as a result of the bending test.

Example 17

2.5g of the polymethyl silsesquioxane obtained in Example 1 were dissolved in 2.5g of chloroform. The solution was combined with 25 mg of tin dioctoate, and the obtained solution was poured into a metal mold and retained intact for 2 days at room temperature. As a result, a solid body having width and thickness of 4 mm and the length of 4.5 cm was obtained. The obtained solid body was subjected to three-point bending tests on a universal testing machine (the

product of Instron Company, Model 4301) with the testing speed of 20 mm/min and in accordance with JIS K-7203. The results showed that the flexural modulus and strength were equal to 500 and 16 MPa, respectively.

Comparative Example 1

The reaction was carried out by the same method as in Example 1 with the use of 31.8g (0.3 mol) of sodium carbonate, 80 ml of water, 80 ml of methyl isobutyl ketone, and 14.9g (0.1 mol) of methyl trichlorosilane. As a result, a white solid containing an insoluble gel was obtained.

Comparative Example 2

The reaction was carried out by the same method as in Example 2 with the use of 33.7g (0.6 mol) of potassium hydroxide, 80 ml of water, 80 ml of methyl isobutyl ketone, and 14.9g (0.1 mol) of methyl trichlorosilane. As a result, a white solid containing an insoluble gel was obtained.

Comparative Example 3

The process was carried out similar to Example 1. However, the dripping of chlorosilane was carried out on an ice bath, and the reaction was carried out for 1 hour at 0°C. The obtained polymethyl silsesquioxane had the weight-average molecular weight equal to 350 and the number-average molecular weight equal to 320. The quantity of hydroxyl groups was 0.33 per 1 atom of silicon.

A film was produced from 1g of the obtained polymethyl silsesquioxane by the same method as in Example 1. The film had cracks, and it was impossible to form a freestanding film.

Comparative Example 4

The process was carried out similar to Example 13, with the exception that the reaction was conducted with an organic solvent comprising a mixture of 16 ml of methyl isobutyl ketone and 64 ml of toluene, the other components being 12.7g (0.12 mol) of sodium carbonate, 80 ml of water, and 14.9g (0.1 mol) of methyl trichlorosilane. After adding the chlorosilane by dripping the reaction was conducted for 1 hour at 30°C, but the formation of gel occurred. The resulting white solid body of polymethyl silsesquioxane was obtained with a yield of only 25%. A molecular weight distribution of the obtained polymethyl silsesquioxane was analyzed by the same method as in Example 1 and showed a weight-average molecular weight equal to 2740 and a number-average molecular weight equal to 670. The number of hydroxyl groups was 0.35 per 1 atom of silicon.

By the same method as in Example 1, a film was produced from 1g of the polymethyl silsesquioxane. The film had cracks and could not be produced independently.

Comparative Example 5

In accordance with the procedure of Example 1 of Japanese Examined Patent Publication [Kokoku] 60-17214, a mixed solvent was prepared by mixing 50 ml of methyl isobutyl ketone and 50 ml of tetrahydrofurane. This mixed solvent was combined with 14.9g (0.1 mol) of methyl trichlorosilane and 4.8g (0.047 mol) of triethylamine. The obtained uniform homogenous solution was further combined with 16.7g of water added by dripping on an ice bath. The reaction mixture was then heated and stirred for 4 hours on an oil bath at 100°C. The reaction mixture was treated in the same manner as in Example 1 whereby a soluble high-molecular weight polymethyl silsesquioxane was synthesized with a weight-average molecular weight equal to 59100 and a number-average molecular weight equal to 5010. The number of hydroxyl groups was 0.16 per 1 atom of silicon.

One gram of the obtained polymethyl silsesquioxane was used preparing a film in accordance with the same procedure as in Example 1. The film had cracks and could not be produced in a freestanding film. Furthermore, this cured material was ground and measured with regard to the thermogravitation loss as in Example 1. The starting weight-decrease temperature was 407°C, the 5% weight-decrease temperature was 471°C. The cured product had thermal stability inferior to that of the cured products of the Examples.

(Comparative Example 6)

The procedure was the same as in Comparative Example 5, but the reaction was carried out with 200 ml of methyl isobutyl ketone as a solvent, 15.2g (0.15 mol) of triethylamine and 5.4g of water. After adding water by dripping, the reaction was carried out for 1 hour at 0°C whereby polymethyl silsesquioxane was synthesized with a weight-average molecular weight equal to 650 and a number-average molecular weight equal to 480. The number of hydroxyl groups was 0.44 per 1 atom of silicon. By the same method as in Example 1, a film was produced from 1g of the polymethyl silsesquioxane. The film had cracks and could not form a freestanding film.

(Comparative Example 7)

The procedure was the same as in Comparative Example 5, but the reaction was carried out with 200 ml of methyl isobutyl ketone as a solvent, 14.9g (0.1 mol) of methyl trichlorosilane, 10.1g (0.1 mol) of triethylamine, and 5.4g of water. After adding water by dripping, the reaction was carried out for 2 hours at 20°C whereby polymethyl silsesquioxane was synthesized with a weight-average molecular weight equal to 3520 and a number-average molecular weight equal to 950. The number of hydroxyl groups was 0.29 per 1 atom of silicon. By the same method as in Example 1, a film was produced from 1g of the polymethyl silsesquioxane. The film had cracks and could not form a freestanding film.

(Comparative Example 8)

The process was carried out in the same manner as in Example 1, with the exception that 80 ml of tetrahydrofuran were used as a solvent instead of methyl isobutyl ketone and that a base, etc., were not used. The reaction system formed a uniform solution and resulted in gelation.

Comparative Example 9

The process was carried out in the same manner as in Example 1, with the exception that 80 ml of toluene were used as a solvent instead of methyl isobutyl ketone and that a base, etc., were not used. Furthermore, similar to Example 1, the reaction system contained 12.7g (0.12 mol) of sodium carbonate, 80 ml of water, and 14.9g (0.1 mol) of methyl trichlorosilane. The reaction system resulted in gelation.

Comparative Example 10

A polymethyl silsesquioxane was prepared in accordance with the procedure described in the literature (S. Nakahama et al., Contemp. Top. Polym. Sci., 1984, Vol. 4, p. 105; Y. Abe et al. J. Polym. Sci. Part A polym. Chem., 1995, vol. 33, p. 751, etc.) by subjecting methyl trimethoxysilane to hydrolysis and condensation with the use of a hydrochloric acid. The obtained polymethyl silsesquioxane was analyzed with regard to the molecular-weight distribution in the same manner as in Example 1. The results showed that a weight-average molecular weight was equal to 2150 and a number-average molecular weight was equal to 660. The obtained polymethyl silsesquioxane contained hydroxyl groups and methoxy groups. The number of hydroxyl groups and methoxy groups determined from the $^{29}$SiNMR spectrum and $^{1}$HNMR spectrum was 0.216 and 0.057 per 1 atom of silicon, respectively.

A film was prepared from the obtained polymethyl silsesquioxane by the said method as in Example 1. The obtained freestanding film was free of cracks. However, the film could not easily withstand the bending test with 180° bending over a 10 mm diameter rod. The tensile strength also was low, i.e., from 2 to 6 MPa. Furthermore, this freestanding film was ground and measured with regard to the thermogravitation loss. The starting weight-decrease temperature was 348°C, the 5% weight-decrease temperature was 469°C. The cured product had thermal stability inferior to that of the cured products of the Examples.

Example 18

1g of a curable polymethyl silsesquioxane obtained in Example 1 was dissolved in 4g of chloroform. The obtained solution was spread over a film made of Teflon and kept for 1 hour at room temperature, and was heated and cured for 1 hour at 50°C and 80°C, respectively, and then for 24 hours at 100°C. The obtained freestanding film had a thickness of 120 μm and had a tensile strength within the range of 3 to 5 MPa. The film was subjected to a bending test around a 8-mm diameter rod and was capable to withstand 180° bending.

Example 19

1g of a curable polymethyl silsesquioxane obtained in Example 1 was dissolved in 4g of chloroform, and a transparent film formed in a manner similar to Example 18 was peeled off the Teflon film and then again subjected to thermal curing for 2 hours at 200°C. The thus obtained 120-μm-thick freestanding film had tensile strength within the range of 1 to 3 MPa. The film was subjected to a bending test around a 10-mm diameter rod and was capable to withstand 180° bending.

Example 20

1g of a curable polymethyl silsesquioxane obtained in Example 4 was dissolved in 4g of chloroform, the obtained solution was spread over a transparent film, and was thermally cured similar to the procedure of Example 18. The resulting freestanding 90-µm-thick film had tensile strength within the range of 2 to 3 MPa. The film was subjected to a bending test around a 8-mm diameter rod and was capable to withstand 180° bending.

Example 21

1g of a curable polymethyl silsesquioxane obtained in Example 4 was dissolved in 4g of chloroform, and the solution was thermally cured similar to the procedure of Example 19. The thus obtained separate 90-µm-thick film had tensile strength within the range of 1 to 2 MPa. The film was subjected to a bending test around a 10-mm diameter rod and was capable to withstand 180° bending.

Example 22

A reactor equipped with a refluxing condenser, two dropping funnels, and a stirrer was prepared for this test. Then a liquid mixture of 40 ml of methyl isobutyl ketone and 14.9g (0.1 mol) of methyl trichlorosilane was added by dripping via one of the dropping funnels while 40 ml of water were introduced by dripping simultaneously via the other dropping funnel into the aforementioned empty reactor which was cooled on an ice bath. The contents were vigorously stirred so as to prevent the formation of two layers. Ten minutes later the dripping was finished, and reaction mixture was then heated and stirred during 2 hours on a 50°C oil bath. Upon completion of the reaction, the reaction product was treated in accordance with the same procedure as in Example 1. As a result, a solid white substance of polymethyl silsesquioxane was obtained. The molecular-weight distribution of the obtained of polymethyl silsesquioxane was measured in accordance with the same procedure as in Example 1 and had a weight-average molecular weight equal to 1320 and a number-average molecular weight equal to 600. The amount of hydroxyl groups was equal to 0.24 per 1 atom of silicon. This polymethyl silsesquioxane was soluble in chloroform, dichloromethane, methyl isobutyl ketone, acetone, tetrahydrofuran, etc., and did not change its solubility and molecular weight distribution after 6 month storage at room temperature in air.

A film was formed from the obtained polymethyl silsesquioxane in the same manner as in Example 1, and the film was tested with regard to the tensile strength. The test showed that the tensile strength of the film was within the range of 13 to 15 MPa. Similar to the procedure of Example 1, a freestanding film having a thickness of 70 µm was subjected to a bending with bending of the film 180° around a rod having a 2 mm diameter. Fractures and cracks were not revealed after testing. Furthermore, similar to the case of Example 1, this freestanding film was ground and measured with regard to the thermogravitation loss. The starting weight decrease temperature was 460°C, the 5% weight-decrease temperate was 511°C.

Example 23

A reactor and reaction system with the same additional equipment which was used in Example 22 was utilized in this test. However, the stirrer was rotated at a low speed that allowed separation of the mixture into an organic layer and a layer of water. Upon completion of the dripping, the contents were heated and stirred during 4 hours on a 50°C oil bath. Upon completion of the reaction, the reaction product was treated in accordance with the same procedure as in Example 1. As a result, a solid white substance of polymethyl silsesquioxane was obtained. The molecular-weight distribution of the obtained polymethyl silsesquioxane was measured in accordance with the same procedure as in Example 1 and had a weight-average molecular weight equal to 1830 and a number-average molecular weight equal to 670. The amount of hydroxyl groups was equal to 0.22 per 1 atom of silicon. This polymethyl silsesquioxane was soluble in chloroform, dichloromethane, methyl isobutyl ketone, acetone, tetrahydrofuran, etc., and did not change its solubility and molecular weight distribution after 6 month storage at room temperature in air.

A film was formed from the obtained polymethyl silsesquioxane in the same manner as in Example 1, and the film was tested with regard to the tensile strength. The test showed that the tensile strength of the film was within the range of 11 to 16 MPa. Similar to the procedure of Example 1, a freestanding film having a thickness of 70 µm was subjected to a bending with bending of the film 180° around a rod having a 2 mm diameter. Fractures and cracks were not revealed after testing.

Possible Areas of Industrial Application

In a cured state, the curable polymethyl silsesquioxane composition of the present invention has excellent

physical and chemical properties and therefore is suitable for application onto surfaces of various materials in the form of protective and a heat-resistant coatings.

## Claims

1. A curable polymethyl silsesquioxane **characterized by** having a number-average molecular weight (M) calibrated against polystyrene within the range of 380 to 2000 and represented by the following formula:

$$[CH_3SiO_{3/2}]_n[CH_3Si(OH)O_{2/2}]_m$$

(where m and n are positive numbers which give said molecular weight, the ratio of m/(m + n) has a value that is within the boundaries of zone A in Fig. 1 which is a graph having $1/(M \times 10^{-3})$ on the abscissa and m/(m + n) on the ordinate and which defines an area limited by the lines represented by the following formulae from (1) to (4), the lines themselves and their intersections being included:

(Formula 1) $m/(m + n) = 0.152/(M \times 10^{-3}) + 0.10;$

(Formula 2) $1/(M \times 10^{-3}) = 1,000/2,000;$

(Formula 3) $1/(M \times 10^{-3}) = 1,000/380;$

and

(Formula 4) $m/(m + n) = 0.034/(M \times 10^{-3})),$

said curable polymethyl silsesquioxane being produced by hydrolyzing and condensing a methyltrihalosilane represented by the formula $MeSiX_3$ (where Me is a methyl group and X is a halogen atom selected from F, Cl, Br, and I) in a two-phase system consisting of (1) water and (2) a solvent selected from (a) an oxygen-containing organic solvent or (b) an oxygen-containing organic solvent in a mixture with a hydrocarbon solvent incorporated in such an amount of not more than 50 vol.%.

2. A method of curing the curable polymethyl silsesquioxane of Claim 1, wherein the polymethyl silsesquioxane is heated to a temperature which is not lower than 50°C but which is not higher than 350°C.

3. The method of Claim 2, wherein the curable polymetyl silsesquioxane is dissolved in at least one of the solvents selected from the group consisting of aromatic hydrocarbon solvents, ether-type solvents, alcohol-type solvents, ketone-type solvents, ester-type solvents, and halogenated hydrocarbon solvents, the solution being subjected to casting by evaporating the solvent and the product then being cured.

4. A cured polymethyl silsesquioxane obtainable by heating and curing the curable polymethyl silsesquioxane of Claim 1 at a temperature higher than 50°C but lower than 350°C.

5. The cured material of Claim 4, wherein the curable polymethyl silsesquioxane is dissolved at least in one of the solvents selected from the group consisting of aromatic hydrocarbon solvents, ether-type solvents, alcohol-type solvents, ketone-type solvents, ester-type solvents, and halogenated hydrocarbon solvents, the solution being subjected to casting by evaporating the solvent and the product then being cured.

6. A method of curing the curable polymethyl silsesquioxane of Claim 1, wherein the curable polymethyl silsesquioxane is heated to a temperature which is not lower than 50°C but which is not higher than 350°C.

7. The method of Claim 6, wherein the curable polymethyl silsesquioxane is dissolved in at least one of the solvents selected from the group consisting of aromatic hydrocarbon solvents, ether-type solvents, alcohol-type solvents,

ketone-type solvents, ester-type solvents, and halogenated hydrocarbon solvents, the solution being subjected to casting by evaporating the solvent and the product then being cured.

**8.** A cured polymethyl silsesquioxane obtainable by heating and curing the cured polymethyl silsesquioxane of Claim 1 at a temperature not lower than 50°C but not higher than 350°C.

**9.** The cured material of Claim 8, wherein the curable polymethyl silsesquioxane is dissolved in at least one of the solvents selected from the group consisting of aromatic hydrocarbon solvents, ether-type solvents, alcohol-type solvents, ketone-type solvents, ester-type solvents, and halogenated hydrocarbon solvents, the solution being subjected to casting, followed by evaporating the solvent and the product then being cured.

**10.** The method of manufacturing the curable polymethyl silsesquioxane of Claim 1 by hydrolyzing said methyltrihalosilane and subjecting the product of the hydrolysis to a reaction of condensation in a two-phase system consisting of water and a substance selected from (a) an oxygen-containing organic solvent or (b) an oxygen-containing organic solvent in a mixture containing a hydrocarbon solvent incorporated therein in an amount of not more than 50 vol.%.

**11.** The method of manufacturing the curable polymethyl silsesquioxane of Claim 1, wherein components (A) or (B) given below are added dropwise to a two-phase system given below, and then hydrolyzing the methyl trihalosilane and subjecting the product of hydrolysis to a condensation reaction, said system consisting of water and a substance selected from (a) an oxygen-containing organic solvent or (b) an oxygen-containing organic solvent in a mixture containing a hydrocarbon solvent incorporated therein in an amount of not more than 50 vol.%.

(A) the methyltrihalosilane,
(B) a solution obtained by dissolving the aforementioned methyltrihalosilane in (a) an oxygen-containing organic solvent or in (b) a mixture of the oxygen-containing organic solvent containing a hydrocarbon solvent incorporated therein in an amount of not more than 50 vol.%.

**12.** The method of manufacturing the curable polymethyl silsesquioxane of Claim 1, wherein the curable polymethyl silsesquioxane is obtained by adding dropwise to only water, a solution prepared by dissolving the methyl trihalosilane in (a) an oxygen-containing organic solvent or (b) an oxygen-containing organic solvent in a mixture containing a hydrocarbon solvent incorporated therein in an amount of not more than 50 vol.%, and then hydrolyzing said methyl trihalosilane and subjecting the product of hydrolysis to a condensation reaction.

**13.** The method of manufacturing the curable polymethyl silsesquioxane of Claim 1, wherein an empty reactor is loaded simultaneously with water and a solution prepared by dissolving the methyl trihalosilane in (a) an oxygen-containing organic solvent or (b) an oxygen-containing organic solvent in a mixture containing a hydrocarbon solvent incorporated therein in an amount of not more than 50 vol.%, said water and said solution being added dropwise, then said methyl trihalosilane being subjected to hydrolysis and the product of hydrolysis being subjected to a condensation reaction.

**14.** The method of manufacturing the curable polymethyl silsesquioxane of Claim 1, wherein the hydrolysis of the methyltrihalosilane and the reaction of condensation of the product of hydrolysis are carried out in a two-phase system which is maintained in a suspension state, said system consisting of water and a substance selected from (a) an oxygen-containing organic solvent or (b) an oxygen-containing organic solvent in a mixture containing a hydrocarbon solvent incorporated therein in an amount of not more than 50 vol.%.

**15.** The curable polymethyl silsesquioxane of Claim 1, wherein the average molecular weight (M) recalculated for polystyrene is within the range of 380 to 1800.

**16.** The method of Claim 6, wherein the average molecular weight (M) calculated for polystyrene is within the range of 380 to 1800.

**17.** The method of Claim 7, wherein the average molecular weight (M) calculated for polystyrene is within the range of 380 to 1800.

**18.** The cured polymethyl silsesquioxane of Claim 8, wherein the average molecule weight (M) calculated for polystyrene is within the range of 380 to 1800.

**19.** The cured polymethyl silsesquioxane of Claim 9, wherein the average molecular weight (M) calculated for polystyrene is within the range of 380 to 1800.

**20.** The method of manufacturing the curable polymethyl silsesquioxane of Claim 1, wherein a two-phase system is formed, said system consisting of (a) one or more than one oxygen-containing organic solvent selected from the group consisting of a ketone solvent, ether solvent, and ester solvent or (b) said oxygen-containing organic solvent in a mixture containing a hydrocarbon solvent incorporated therein in an amount of not more than 50 vol.%, and water, in which water, a water-soluble inorganic base or a salt of a weak acid which possesses buffering ability is dissolved in said water in the amount of not more than 1.8 gram-equivalent quantity per 1 mol of halogen atom in one molecule of a trihalosilane of the type defined below as components (A) or (B), said components (A) or (B) being added by dripping, and then the methyl trihalosilane being subjected to hydrolysis and the product of hydrolysis being subjected to a reaction of condensation.

(A) the methyltrihalosilane represented by the following formula: $MeSiX_3$ (where Me is a methyl group and X is halogen atom selected from F, Cl, Br, and I;
(B) a solution obtained by dissolving the aforementioned methyltrihalosilane in (a) an oxygen-containing organic solvent or in (b) a mixture of the oxygen-containing organic solvent containing a hydrocarbon solvent incorporated therein in an amount of not more than 50 vol.%.

**21.** A method of manufacturing the curable polymethyl silsesquioxane of Claim 20, wherein the oxygen-containing organic solvent is ketone-type solvent.

**22.** A method of manufacturing the curable polymethyl silsesquioxane of Claim 20, wherein the oxygen-containing organic solvent is methylisobutyl ketone.

**23.** A method of manufacturing the curable polymethyl silsesquioxane of Claim 20, wherein the substance dissolved in water is a water-soluble inorganic base.

**24.** A method of manufacturing the curable polymethyl silsequioxane of Claim 20, wherein the substance dissolved in water is a base of a weak acid with buffering properties.

**25.** A method of manufacturing the curable polymethyl silsesquioxane of Claim 20, wherein the substance dissolved in water is sodium carbonate.

**26.** A method of manufacturing the curable polymethyl silsesquioxane of Claim 20, wherein the oxygen-containing organic solvent is a ketone-type solvent, and the substance dissolved in water is a base of a weak acid with buffering ability.

**27.** A method of manufacturing the curable polymethyl silsesquioxane of Claim 20, wherein the oxygen-containing organic solvent is methylisobutyl ketone, and the substance dissolved in water is sodium carbonate.

**28.** A method of manufacturing the curable polymethyl silsesquioxane of Claim 20, wherein hydrolysis of the methyltrihalosilane and condensation of the product of hydrolysis are carried out under conditions of a suspension.

**29.** A method of manufacturing the curable polymethyl silsesquioxane of Claim 20, wherein the oxygen-containing organic solvent is methylisobutyl ketone, the substance dissolved in water is sodium carbonate, and wherein hydrolysis of the methyltrihalosilane and condensation of the product of hydrolysis are carried out under conditions of a suspension.

**Patentansprüche**

**1.** Härtbares Polymethyl-silsesquioxan, **dadurch gekennzeichnet, dass** es ein zahlendurchschnittliches Molekulargewicht (M), geeicht gegen Polystyrol, innerhalb des Bereiches von 380 bis 2000 aufweist und dargestellt wird durch die folgende Formel:

$$[CH_3SiO_{3/2}]_n[CH_3Si(OH)O_{2/2}]_m$$

worin m und n positive Zahlen darstellen, die das genannte Molekulargewicht ergeben, wobei das Verhältnis m/(m + n) einen Wert hat, der innerhalb der Grenzen der Zone A in der Fig. 1 liegt, die ein Diagramm darstellt, in dem $1/(M \times 10^{-3})$ auf der Abszisse und m/(m + n) auf der Ordinate aufgetragen sind und die eine Fläche definiert, die durch die Linien, dargestellt durch die folgenden Formeln (1) bis (4) definiert sind, wobei die Linien selbst und ihre Schnittpunkte mit der Fläche gehören:

Formel 1: $$m/(m + n) = 0,152/(M \times 10^{-3}) + 0,10$$

Formel 2: $$1/(M \times 10^{-3}) = 1000/2000$$

Formel 3: $$1/(M \times 10^{-3}) = 1000/380$$

und

Formel 4: $$m/(m + n) = 0,034/(M \times 10^{-3}),$$

wobei das genannte härtbare Polymethyl-silsesquioxan hergestellt worden ist durch Hydrolysieren und Kondensieren eines Methyltrihalogensilans der Formel $MeSiX_3$, worin Me für eine Methylgruppe und X für ein Halogenatom, ausgewählt aus F, Cl, Br und I, stehen, in einem Zwei-Phasen-System, das besteht aus (1) Wasser und (2) einem Lösungsmittel, ausgewählt aus (a) einem Sauerstoff enthaltenden organischen Lösungsmittel oder (b) einem Sauerstoff enthaltenden organischen Lösungsmittel in einer Mischung mit einem Kohlenwasserstoff-Lösungsmittel, das dieser in einer Menge von nicht mehr als 50 Vol.-% zugesetzt worden ist.

**2.** Verfahren zum Aushärten des härtbaren Polymethyl-silsesquioxans nach Anspruch 1, worin das Polymethyl-silsesquioxan auf eine Temperatur, die nicht niedriger ist als 50°C, die aber auch nicht höher ist als 350°C, erhitzt wird.

**3.** Verfahren nach Anspruch 2, worin das härtbare Polymethyl-silsesquioxan in mindestens einem der Lösungsmittel, ausgewählt aus der Gruppe, die besteht aus aromatischen Kohlenwasserstoff-Lösungsmitteln, Lösungsmitteln vom Ether-Typ, Lösungsmitteln vom Alkohol-Typ, Lösungsmitteln vom Keton-Typ, Lösungsmitteln vom Ester-Typ und halogenierten Kohlenwasserstoff-Lösungsmitteln, gelöst wird, die Lösung unter Verdampfen des Lösungsmittels vergossen wird und das Produkt dann ausgehärtet wird.

**4.** Ausgehärtetes Polymethyl-silsesquioxan, das erhältlich ist durch Erhitzen und Aushärten des härtbaren Polymethyl-silsesquioxans nach Anspruch 1 bei einer Temperatur, die höher ist als 50°C, jedoch niedriger ist als 350°C.

**5.** Ausgehärtetes Material nach Anspruch 4, wobei das härtbare Polymethyl-silsesquioxan in mindestens einem der Lösungsmittel, ausgewählt aus der Gruppe, die besteht aus aromatischen Kohlenwasserstoff-Lösungsmitteln, Lösungsmitteln vom Ether-Typ, Lösungsmitteln vom Alkohol-Typ, Lösungsmitteln vom Keton-Typ, Lösungsmitteln vom Ester-Typ und halogenierten Kohlenwasserstoff-Lösungsmitteln, gelöst, die Lösung unter Verdampfen des Lösungsmittels vergossen und das Produkt dann gehärtet worden ist.

**6.** Verfahren zum Aushärten des härtbaren Polymethyl-silsesquioxans nach Anspruch 1, worin das härtbare Polymethyl-silsesquioxan auf eine Temperatur erhitzt wird, die nicht niedriger als 50°C, aber auch nicht höher als 350°C ist.

**7.** Verfahren nach Anspruch 6, worin das härtbare Polymethyl-silsesquioxah in mindestens einem der Lösungsmittel, ausgewählt aus der Gruppe, die besteht aus aromatischen Kohlenwasserstoff-Lösungsmitteln, Lösungsmitteln vom Ether-Typ, Lösungsmitteln vom Alkohol-Typ, Lösungsmitteln vom Keton-Typ, Lösungsmitteln vom Ester-Typ und halogenierten Kohlenwasserstoff-Lösungsmitteln, gelöst wird, die Lösung unter Verdampfen des Lösungsmittels vergossen und das Produkt anschließend ausgehärtet wird.

**8.** Ausgehärtetes Polymethyl-silsesquioxan, das erhältlich ist durch Erhitzen und Aushärten des härtbaren Polymethyl-silsesquioxans nach Anspruch 1 auf eine Temperatur von nicht weniger als 50°C, jedoch nicht mehr als 350°C.

**9.** Ausgehärtetes Material nach Anspruch 8, bei dem das härtbare Polymethyl-silsesquioxan in mindestens einem der Lösungsmittel, ausgewählt aus der Gruppe, die besteht aus aromatischen Kohlenwasserstoff-Lösungsmitteln, Lösungsmitteln vom Ether-Typ, Lösungsmitteln vom Alkohol-Typ, Lösungsmitteln vom Keton-Typ, Lösungsmitteln vom Ester-Typ und halogenierten Kohlenwasserstoff-Lösungsmitteln, gelöst, die Lösung vergossen, das Lösungsmittel anschließend verdampft und das Produkt dann ausgehärtet worden ist.

**10.** Verfahren zur Herstellung des härtbaren Polymethyl-silsesquioxans nach Anspruch 1 durch Hydrolysieren des genannten Methyltrihalogensilans und Durchführung einer Kondensationsreaktion mit dem Hydrolyseprodukt in einem Zwei-Phasen-System, das besteht aus Wasser und einer Substanz, ausgewählt aus (a) einem Sauerstoff enthaltenden organischen Lösungsmittel oder (b) einem Sauerstoff enthaltenden organischen Lösungsmittel in einer Mischung, die ein Kohlenwasserstoff-Lösungsmittel in einer Menge von nicht mehr als 50 Vol.-% enthält.

**11.** Verfahren zur Herstellung des härtbaren Polymethyl-silsesquioxans nach Anspruch 1, bei dem die nachstehend angegebenen Komponenten (A) oder (B) zu einem nachstehend angegebenen Zwei-Phasen-System zugetropft werden und dann das Methyltrihalogensilan hydrolysiert wird und das Hydrolyseprodukt einer Kondensationsreaktion unterworfen wird, wobei das genannte System besteht aus Wasser und einer Substanz, ausgewählt aus (a) einem Sauerstoff enthaltenden organischen Lösungsmittel oder (b) einem Sauerstoff enthaltenden organischen Lösungsmittel in einer Mischung, die ein Kohlenwasserstoff-Lösungsmittel in einer Menge von nicht mehr als 50 Vol.-% enthält:

(A) Methyltrihalogensilan,
(B) eine Lösung, hergestellt durch Auflösen des oben genannten Methyltrihalogensilans in (a) einem Sauerstoff enthaltenden organischen Lösungsmittel oder in (b) einer Mischung des Sauerstoff enthaltenden organischen Lösungsmittels, das ein Kohlenwasserstoff-Lösungsmittel in einer Menge von nicht mehr als 50 Vol.-% enthält.

**12.** Verfahren zur Herstellung des härtbaren Polymethyl-silsesquioxans nach Anspruch 1, bei dem das härtbare Polymethyl-silsesquioxan erhalten wird durch Zutropfen einer Lösung, hergestellt durch Auflösen von Methyltrihalogensilan in (a) einem Sauerstoff enthaltenden organischen Lösungsmittel oder (b) einem Sauerstoff enthaltenden organischen Lösungsmittel in einer Mischung, die ein Kohlenwasserstoff-Lösungsmittel in einer Menge von nicht mehr als 50 Vol.-% enthält, nur zu Wasser und anschließendes Hydrolysieren des genannten Methyltrihalogensilans und Durchführung einer Kondensationsreaktion mit dem Hydrolyseprodukt.

**13.** Verfahren zur Herstellung des härtbaren Polymethyl-silsesquioxans nach Anspruch 1, bei dem ein leerer Reaktor mit Wasser und einer Lösung, hergestellt durch Auflösen von Methyltrihalogensilan in (a) einem Sauerstoff enthaltenden organischen Lösungsmittel oder (b) einem Sauerstoff enthaltenden organischen Lösungsmittel in einer Mischung, die ein Kohlenwasserstoff-Lösungsmittel in einer Menge von nicht mehr als 50 Vol.-% enthält, gleichzeitig beladen wird, wobei das Wasser und die Lösung zugetropft werden, danach das Methyltrihalogensilan einer Hydrolyse unterworfen wird und das Hydrolyseprodukt einer Kondensationsreaktion unterworfen wird.

**14.** Verfahren zur Herstellung des härtbaren Polymethyl-silsesquioxans nach Anspruch 1, bei dem die Hydrolyse des Methyltrihalogensilans und die Kondensationsreaktion des Hydrolyseprodukt in einem Zwei-Phasen-System durchgeführt werden, das in einem Suspensionszustand gehalten wird, wobei das genannte System besteht aus Wasser und einer Substanz, ausgewählt aus (a) einem Sauerstoff enthaltenden organischen Lösungsmittel oder (b) einem Sauerstoff enthaltenden organischen Lösungsmittel in einer Mischung, die ein Kohlenwasserstoff-Lösungsmittel in einer Menge von nicht mehr als 50 Vol.-% enthält.

**15.** Härtbares Polymethyl-silsesquioxan nach Anspruch 1, dessen durchschnittliches Molekulargewicht (M), berechnet für Polystyrol, innerhalb des Bereiches von 380 bis 1800 liegt.

**16.** Verfahren nach Anspruch 6, bei dem das durchschnittliche Molekulargewicht (M), berechnet für Polystyrol, innerhalb des Bereiches von 380 bis 1800 liegt.

**17.** Verfahren nach Anspruch 7, bei dem das durchschnittliche Molekulargewicht (M), berechnet für Polystyrol, innerhalb des Bereiches von 380 bis 1800 liegt.

**18.** Ausgehärtetes Polymethyl-silsesquioxan nach Anspruch 8, dessen durchschnittliches Molekulargewicht (M), berechnet für Polystyrol, innerhalb des Bereiches von 380 bis 1800 liegt.

**19.** Ausgehärtetes Polymethyl-silsesquioxan nach Anspruch 9, dessen durchschnittliches Molekulargewicht (M), berechnet für Polystyrol, innerhalb des Bereiches von 380 bis 1800 liegt.

**20.** Verfahren zur Herstellung des härtbaren Polymethyl-silsesquioxans nach Anspruch 1, bei dem ein Zwei-Phasen-System gebildet wird, das besteht aus (a) einem oder mehr als einem Sauerstoff enthaltenden organischen Lösungsmittel, ausgewählt aus der Gruppe, die besteht aus einem Keton-Lösungsmittel, einem Ether-Lösungsmittel und einem Ester-Lösungsmittel, oder (b) dem genannten Sauerstoff enthaltenden organischen Lösungsmittel in einer Mischung, die ein Kohlenwasserstoff-Lösungsmittel in einer Menge von nicht mehr als 50 Vol.-% enthält, und Wasser, wobei das Wasser eine wasserlösliche anorganische Base oder ein Salz einer schwachen Säure, das ein Puffervermögen aufweist, in einer Menge von nicht mehr als 1,8 Gramm-Äquivalenten pro mol Halogenatom in einem Molekül eines Trihalogensilans des nachstehend als Komponenten (A) oder (B) angegebenen Typs enthält, wobei die genannten Komponenten (A) oder (B) durch Zutropfen zugegeben werden und dann das Methyltrihalogensilan hydrolysiert wird und das Hydrolyseprodukt einer Kondensationsreaktion unterworfen wird:

(A) Methyltrihalogensilan, dargestellt durch die Formel $MeSiX_3$, worin Me für eine Methylgruppe und X für ein Halogenatom, ausgewählt aus F, Cl, Br und I, stehen;
(B) eine Lösung, hergestellt durch Auflösen des oben genannten Methyltrihalogensilans in (a) einem Sauerstoff enthaltenden organischen Lösungsmittel oder in (b) einer Mischung des Sauerstoff enthaltenden organischen Lösungsmittels, die ein Kohlenwasserstoff-Lösungsmittel in einer Menge von nicht mehr als 50 Vol.-% enthält.

**21.** Verfahren zur Herstellung des härtbaren Polymethyl-silsesquioxans nach Anspruch 20, worin das Sauerstoff enthaltende organische Lösungsmittel ein Lösungsmittel von Keton-Typ ist.

**22.** Verfahren zur Herstellung des härtbaren Polymethyl-silsesquioxans nach Anspruch 20, worin das Sauerstoff enthaltende organische Lösungsmittel Methylisobutylketon ist.

**23.** Verfahren zur Herstellung des härtbaren Polymethyl-silsesquioxans nach Anspruch 20, worin die in Wasser gelöste Substanz eine wasserlösliche anorganische Base ist.

**24.** Verfahren zur Herstellung des härtbaren Polymethyl-silsesquioxans nach Anspruch 20, bei dem die in Wasser gelöste Substanz eine Base einer schwachen Säure mit Puffereigenschaften ist.

**25.** Verfahren zur Herstellung des härtbaren Polymethyl-silsesquioxans nach Anspruch 20, bei dem die in Wasser gelöste Substanz Natriumcarbonat ist.

**26.** Verfahren zur Herstellung des härtbaren Polymethyl-silsesquioxans nach Anspruch 20, bei dem das Sauerstoff enthaltende organische Lösungsmittel ein Lösungsmittel von Keton-Typ ist und die in Wasser gelöste Substanz eine Base einer schwachen Säure mit einem Puffervermögen ist.

**27.** Verfahren zur Herstellung des härtbaren Polymethyl-silsesquioxans nach Anspruch 20, bei dem das Sauerstoff enthaltende organische Lösungsmittel Methylisobutylketon ist und die in Wasser gelöste Substanz Natriumcarbonat ist.

**28.** Verfahren zur Herstellung des härtbaren Polymethyl-silsesquioxans nach Anspruch 20, bei dem die Hydrolyse des Methyltrihalogensilans und die Kondensation des Hydrolyseprodukts unter den Bedingungen einer Suspension durchgeführt werden.

**29.** Verfahren zur Herstellung des härtbaren Polymethyl-silsesquioxans nach Anspruch 20, bei dem das Sauerstoff enthaltende organische Lösungsmittel Methylisobutylketon ist, die in Wasser gelöste Substanz Natriumcarbonat ist und die Hydrolyse von Methyltrihalogensilan und die Kondensation des Hydrolyseprodukts unter den Bedingungen einer Suspension durchgeführt werden.

## Revendications

**1.** Polyméthylsilsesquioxane durcissable, **caractérisé en ce qu'**il possède une masse moléculaire moyenne en nombre (M) étalonnée par rapport au polystyrène comprise dans la plage de 380 à 2000 et qu'il est représenté par la

formule suivante :

$$[CH_3SiO_{3/2}]_n[CH_3Si(OH)O_{2/2}]_m$$

(où m et n sont des chiffres positifs qui indiquent ladite masse moléculaire, le rapport de m/( m + n) a une valeur comprise dans les limites de la zone A de la figure 1 qui est un graphique ayant $1/(M \times 10^{-3})$ en abscisse et m/(m + n) en ordonnée et qui définit une aire limitée par les lignes représentées par les formules suivantes de (1) à (4), les lignes elles-mêmes et leurs intersections étant comprises :

(Formule 1) $m/(m + n) = 0{,}152/(M \times 10^{-3}) + 0{,}10$ ;

(Formule 2) $1/(M \times 10^{-3}) = 1000/2000$ ;

(Formule 3) $1/(10 \times 10^{-3}) = 1000/380$ ;

et

(Formule 4) $m/(m + n) = 0{,}034/(M \times 10^{-3})$,

ledit polyméthylsilsesquioxane durcissable étant produit par hydrolyse et condensation d'un méthyltrihalogénosilane représenté par la formule $MeSiX_3$ (où Me est un groupe méthyle et X est un atome d'halogène sélectionné parmi F, Cl, Br et I) dans un système biphasique constitué de (1) l'eau et (2) un solvant sélectionné parmi (a) un solvant organique contenant de l'oxygène ou (b) un solvant organique contenant de l'oxygène en mélange avec un solvant hydrocarboné incorporé en une quantité telle qu'elle ne dépasse pas 50 % en volume.

**2.** Procédé de durcissement du polyméthylsilsesquioxane durcissable selon la revendication 1, où le polyméthylsilsesquioxane est chauffé à une température qui n'est pas inférieure à 50°C, mais qui n'est pas supérieure à 350°C.

**3.** Procédé selon la revendication 2, où le polyméthylsilsesquioxane durcissable est dissous dans au moins un des solvants sélectionnés dans le groupe constitué par les solvants hydrocarbonés aromatiques, les solvants de type éther, les solvants de type alcool, les solvants de type cétone, les solvants de type ester et les solvants hydrocarbonés halogénés, la solution étant soumise à une coulée par évaporation du solvant et le produit étant ainsi durci.

**4.** Polyméthylsilsesquioxane durci susceptible d'être obtenu par chauffage et durcissement du polyméthylsilsesquioxane durcissable de la revendication 1 à une température supérieure à 50°C, mais inférieure à 350°C.

**5.** Substance durcie selon la revendication 4, où le polyméthylsilsesquioxane durcissable est dissous dans au moins un des solvants sélectionnés dans le groupe constitué par les solvants hydrocarbonés aromatiques, les solvants de type éther, les solvants de type alcool, les solvants de type cétone, les solvants de type ester et les solvants hydrocarbonés halogénés, la solution étant soumise à une coulée par évaporation du solvant et le produit étant alors durci.

**6.** Procédé de durcissement du polyméthylsilsesquioxane durcissable selon la revendication 1, où le polyméthylsilsesquioxane durcissable est chauffé à une température qui n'est pas inférieure à 50°C, mais qui n'est pas supérieure à 350°C.

**7.** Procédé selon la revendication 6, où le polyméthylsilsesquioxane durcissable est dissous dans au moins un des solvants sélectionnés dans le groupe constitué par les solvants hydrocarbonés aromatiques, les solvants de type éther, les solvants de type alcool, les solvants de type cétone, les solvants de type ester et les solvants hydrocarbonés halogénés, la solution étant soumise à une coulée par évaporation du solvant et le produit étant alors durci.

**8.** Polyméthylsilsesquioxane durci susceptible d'être obtenu par chauffage et durcissement du polyméthylsilsesquioxane durci selon la revendication 1 à une température qui n'est pas inférieure à 50°C, mais qui n'est pas

supérieure à 350°C.

**9.** Substance durcie selon la revendication 8, où le polyméthylsilsesquioxane durcissable est dissous dans au moins un des solvants sélectionnés dans le groupe constitué par les solvants hydrocarbonés aromatiques, les solvants de type éther, les solvants de type alcool, les solvants de type cétone, les solvants de type ester et les solvants hydrocarbonés halogénés, la solution étant soumise à une coulée, suivie de l'évaporation du solvant et le produit étant alors durci.

**10.** Procédé de fabrication du polyméthylsilsesquioxane durcissable selon la revendication 1 par hydrolyse du diméthyltrihalogénosilane et soumission du produit de l'hydrolyse à une réaction de condensation dans un système biphasique consistant en eau et en une substance sélectionnée parmi (a) un solvant organique contenant de l'oxygène ou (b) un solvant organique contenant de l'oxygène dans un mélange contenant un solvant hydrocarboné qui y est incorporé en une quantité qui n'est pas supérieure à 50 % en volume.

**11.** Procédé de fabrication du polyméthylsilsesquioxane durcissable selon la revendication 1, où les composants (A) ou (B) indiqués ci-dessous sont ajoutés goutte à goutte à un système biphasique indiqué ci-dessous, puis le méthyltrihalogénosilane est hydrolysé et le produit de l'hydrolyse est soumis à une réaction de condensation, ledit système étant constitué d'eau et d'une substance sélectionnée parmi (a) un solvant organique contenant de l'oxygène ou (b) un solvant organique contenant de l'oxygène dans un mélange contenant un solvant hydrocarboné qui y est incorporé en une quantité qui n'est pas supérieure à 50 % en volume.

(A) le méthyltrihalogénosilane,
(B) une solution obtenue par dissolution du méthyltrihalogénosilane susmentionné dans (a) un solvant organique contenant de l'oxygène ou dans (b) un mélange du solvant organique contenant de l'oxygène contenant un solvant hydrocarboné qui y est incorporé en une quantité qui n'est pas supérieure à 50 % en volume.

**12.** Procédé de fabrication du polyméthylsilsesquioxane durcissable selon la revendication 1, où le polyméthylsilsesquioxane durcissable est obtenu par addition goutte à goutte, à de l'eau uniquement, d'une solution préparée par dissolution du méthyltrihalogénosilane dans (a) un solvant organique contenant de l'oxygène ou (b) un solvant organique contenant de l'oxygène dans un mélange contenant un solvant hydrocarboné qui y est incorporé en une quantité qui n'est pas supérieure à 50 % en volume, puis par hydrolyse dudit méthyltrihalogénosilane et soumission du produit de l'hydrolyse à une réaction de condensation.

**13.** Procédé de fabrication du polyméthylsilsesquioxane durcissable selon la revendication 1, où un réacteur vide est chargé simultanément d'eau et d'une solution préparée par dissolution du méthyltrihalogénosilane dans (a) un solvant organique contenant de l'oxygène ou (b) un solvant organique contenant de l'oxygène dans un mélange contenant un solvant hydrocarboné qui y est incorporé en une quantité qui n'est pas supérieure à 50 % en volume, ladite eau et ladite solution étant ajoutées goutte à goutte, puis ledit méthyltrihalogénosilane étant soumis à une hydrolyse et le produit de l'hydrolyse étant soumis à une réaction de condensation.

**14.** Procédé de fabrication du polyméthylsilsesquioxane durcissable selon la revendication 1, où l'hydrolyse du méthyltrihalogénosilane et la réaction de condensation du produit de l'hydrolyse sont menées dans un système biphasique qui est maintenu à l'état de suspension, ledit système consistant en eau et en une substance sélectionné parmi (a) un solvant organique contenant de l'oxygène ou (b) un solvant organique contenant de l'oxygène dans un mélange contenant un solvant hydrocarboné qui y est incorporé en une quantité qui n'est pas supérieure à 50 % en volume.

**15.** Polyméthylsilsesquioxane durcissable selon la revendication 1, où la masse moléculaire moyenne (M) recalculée pour le polystyrène est comprise dans la plage de 380 à 1800.

**16.** Procédé selon la revendication 6, où la masse moléculaire moyenne (M) calculée pour le polystyrène est comprise dans la plage de 380 à 1800.

**17.** Procédé selon la revendication 7, où la masse moléculaire moyenne (M) calculée pour le polystyrène est comprise dans la plage de 380 à 1800.

**18.** Polyméthylsilsesquioxane durci selon la revendication 8, où la masse moléculaire moyenne (M) calculée pour le polystyrène est comprise dans la plage de 380 à 1800.

**19.** Polyméthylsilsesquioxane durci selon la revendication 9, où la masse moléculaire moyenne (M) calculée pour le polystyrène est comprise dans la plage de 380 à 1800.

**20.** Procédé de fabrication du polyméthylsilsesquioxane durcissable selon la revendication 1, où il est formé un système biphasique, ledit système étant constitué de (a) un solvant organique contenant de l'oxygène ou plus, sélectionné dans le groupe constitué par un solvant de type cétone, un solvant de type éther et un solvant de type ester ou (b) dudit solvant organique contenant de l'oxygène dans un mélange contenant un solvant hydrocarboné qui est incorporé en une quantité qui n'est pas supérieure à 50 % en volume, et de l'eau, dans laquelle eau est dissoute une base inorganique hydrosoluble ou un sel d'un acide faible qui possède une capacité tampon dans ladite eau à un taux qui n'est pas supérieur à une quantité de 1,8 équivalent-gramme par mole d'atome d'halogène dans une molécule d'un trihalogénosilane du type défini ci-dessous sous forme des composants (A) ou (B), lesdits composants (A) ou (B) étant ajoutés goutte à goutte, et le méthyltrihalogénosilane étant alors soumis à une hydrolyse et le produit de l'hydrolyse étant soumis à une réaction de condensation.

(A) le méthyltrihalogénosilane représenté par la formule suivante : $MeSiX_3$ (où Me est un groupe méthyle et X est un atome d'halogène sélectionné parmi F, Cl, Br et I) ;
(B) une solution obtenue par dissolution du méthyltrihalogénosilane susmentionné dans (a) un solvant organique contenant de l'oxygène ou dans (b) un mélange du solvant organique contenant de l'oxygène contenant un solvant hydrocarboné qui y est incorporé en une quantité qui n'est pas supérieure à 50 % en volume.

**21.** Procédé de fabrication du polyméthylsilsesquioxane durcissable selon la revendication 20, où le solvant organique contenant de l'oxygène est un solvant de type cétone.

**22.** Procédé de fabrication du polyméthylsilsesquioxane durcissable selon la revendication 20, où le solvant organique contenant de l'oxygène est de la méthylisobutylcétone.

**23.** Procédé de fabrication du polyméthylsilsesquioxane durcissable selon la revendication 20, où la substance dissoute dans l'eau est une base inorganique hydrosoluble.

**24.** Procédé de fabrication du polyméthylsilsesquioxane durcissable selon la revendication 20, où la substance dissoute dans l'eau est une base d'un acide faible ayant des propriétés de tamponnement.

**25.** Procédé de fabrication du polyméthylsilsesquioxane durcissable selon la revendication 20, où la substance dissoute dans l'eau est le carbonate de sodium.

**26.** Procédé de fabrication du polyméthylsilsesquioxane durcissable selon la revendication 20, où le solvant organique contenant de l'oxygène est un solvant de type cétone et la substance dissoute dans l'eau est une base d'un acide faible ayant une capacité tampon.

**27.** Procédé de fabrication du polyméthylsilsesquioxane durcissable selon la revendication 20, où le solvant organique contenant de l'oxygène est la méthylisobutylcétone et la substance dissoute dans l'eau est du carbonate de sodium.

**28.** Procédé de fabrication du polyméthylsilsesquioxane durcissable selon la revendication 20, où l'hydrolyse du méthyltrihalogénosilane et la condensation du produit de l'hydrolyse sont menées dans les conditions d'une suspension.

**29.** Procédé de fabrication du polyméthylsilsesquioxane durcissable selon la revendication 20, où le solvant organique contenant de l'oxygène est la méthylisobutylcétone, la substance dissoute dans l'eau est le carbonate de sodium et où l'hydrolyse du méthyltrihalogénosilane et la condensation du produit de l'hydrolyse sont menées dans les conditions d'une suspension.

Fig.1

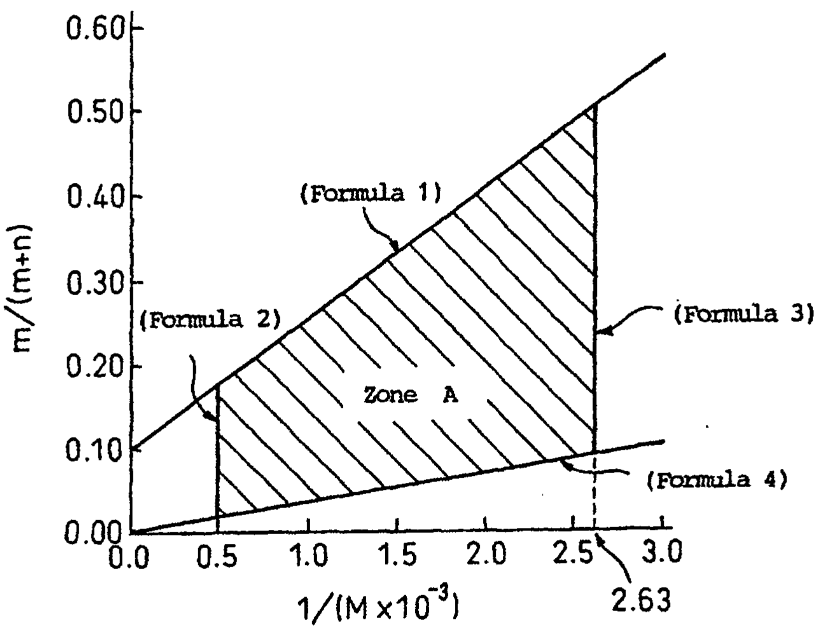
0.60
0.50
0.40
0.30
0.20
0.10
0.00
m/(m+n)
(Formula 1)
(Formula 2)
(Formula 3)
(Formula 4)
Zone A
0.0
0.5
1.0
1.5
2.0
2.5
3.0
2.63
1/(M x10⁻³)